# EUROPÄISCHE PATENTSCHRIFT

(11) **EP 0 858 563 B1**
(45) Veröffentlichungstag und Bekanntmachung des Hinweises auf die Patenterteilung: **01.12.1999**
(21) Anmeldenummer: 96946363.7
(22) Anmeldetag: 20.06.1996
(51) Int. Cl.: F16H 7/12

(54) **SPANNEINRICHTUNG FÜR ZUGMITTEL MIT KONUS-GLEITLAGER**
TENSIONING DEVICE FOR TRACTION MEANS WITH CONE FRICTION BEARING
DISPOSITIF DE SERRAGE DOTE D'UN PALIER A FRICTION CONIQUE ET DESTINE A DES MOYENS DE TRACTION

(30) Priorität: 02.11.1995 DE 19540706
(43) Veröffentlichungstag der Anmeldung: 19.08.1998
(73) Patentinhaber: INA Wälzlager Schaeffler oHG, 91072 Herzogenaurach (DE)
(72) Erfinder: GIESE, Peter, D-91074 Herzogenaurach (DE); PETRI, Werner, D-91058 Erlangen (DE); RÄCKE, Mathis, D-04105 Leipzig (DE)
(86) Internationale Anmeldenummer: EP9602682
(87) Internationale Veröffentlichungsnummer: WO9716658

(56) Entgegenhaltungen:
- DE-C- 4 300 178
- US-A- 4 472 162
- US-A- 4 698 049

## Beschreibung

Die vorliegende Erfindung betrifft eine Spanneinrichtung für Zugmittel wie Riemen und Ketten, mit einem ein Spannmittel, vorzugsweise Spannrolle tragenden, gegen das Zugmittel angefederten Spannarm, der gegenüber einem ortsfesten Element mittels eines Gleitlagers drehbar gelagert ist, dessen Gleitlagerflächen als zueinander parallel und zur Spannarmachse konzentrisch angeordnete Kegelflächen ausgebildet sind, und mit einer entlang der Spannarmachse gewundenen, einerseits an einer spannarmfesten Stützte und andererseits an einer ortsfesten Stütze abgestützten Schraubendrehfeder.

### Hintergrund der Erfindung

Eine derartige Spanneinrichtung ist beispielsweise in der US-A 46 98 049 offenbart. Die Spannarmachse und das ortsfeste Element weisen je eine Kegelfläche auf, wobei zwischen diesen beiden Kegelflächen eine kegelige Gleitlagerbuchse angeordnet ist. Bei Radialspiel im Gleitlager infolge von abrasiven Verschleiß an den Gleitlagerflächen müssen die kegeligen Gleitlagerflächen von Hand axial soweit aufeinander zu geschoben und positioniert werden, bis das Radialspiel im Gleitlager wieder in einem zulässig hohen Toleranzbereich liegt.

DE 43 00 178 C offenbart eine Riemenspannvorrichtung, bei der ebenfalls ein kegeliges Gleitlager zur Lagerung des Spannarms verwendet wird. Die mit den Gleitlagerflächen versehenen Bauteile werden mittels einer separaten, axial vorgespannten Feder gegeneinander gedrückt. Infolge eines abrasiven Verschleißes an dem Gleitlager werden die Bauteile unter der Wirkung der separaten Feder aufeinander bewegt, so daß das Gleitlager spielfrei bleibt. Allerdings ist diese Riemenspannvorrichtung deshalb aufwendig, weil neben der notwendigen Schraubendrehfeder, die für die Belastung des Spannarms vorgesehen ist, zusätzlich die separate Feder erforderlich ist.

US 44 72 162 A offenbart eine Riemenspannvorrichtung, bei der der Spannarm auf einer Achse mittels eines Radialgleitlagers schwenkbar gelagert ist. Der Spannarm wird mittels einer Schraubendrehfeder gegen den Riemen angefedert. Am freien Ende der Achse ist ein kegelförmiges Elastomerteil vorgesehen, dessen kegelige äußere Mantelfläche an einer kegeligen inneren Mantelfläche des Spannarms anliegt. Das Elastomerteil ist auf die Achse aufgesetzt. Das Elastomerteil ist unter Vorspannung zwischen dem Spannarm durch eine Reibung zwischen der inneren zylindrischen Mantelfläche des Elastomehrteils und der äußeren zylindrischen Mantelfläche der Achse bewirkt. Wenn an dem zylindrischen Gleitlager abrasiver Verschleiß eintritt, besteht die Gefahr von unerrwünschtem Lagerspiel. Ein Nachstellen des Gleitlagers ist wegen der zylindrischen Formgebung der Gleitlagerflächen nicht möglich.

### Zusammenfassung der Erfindung

Es ist Aufgabe der vorliegenden Erfindung, eine gattungsgemäße Spanneinrichtung derart weiterzubilden, daß mit einfachen Mitteln ein selbstätiges Nachstellen der Gleitlagerflächen gesichert ist. Erfindungsgemäß wird daher vorgeschlagen, daß auf die Schraubendruckfeder im eingebauten Zustand neben der Torsionsvorspannung eine axiale Vorspannung aufgebracht ist, wobei die zwischen diesen Stützen unter Ausübung der axialen Kraft eingespannte Schraubendrehfeder ihre axiale Kraft als zu den Gleitlagerflächen senkrecht angeordnete Reaktionskraft in das Gleitlager einleitet, so daß die Gleitlagerflächen unter der axialen Kraft gegeneinander gedrückt sind. Diese Anordnung weist etliche Vorteile auf. Zunächst ist gewährleistet, daß bei abrasivem Verschleiß an den Gleitlagerflächen diese Gleitlagerflächen infolge der axialen Kraft bzw. der senkrecht zu den Gleitlagerflächen wirkenden Reaktionskraft gegeneinander gedrückt werden und deshalb ein spielfreies Gleitlager geschaffen ist. Bei konstantem Neigungswinkel der Gleitlagerflächen zu deren Achse läßt sich die Reaktionskraft über die axiale Einspannung bzw. die axiale Kraft der Schraubendrehfeder variabel gestalten. Oftmals werden aus Kunststoff gebildete kegelige Gleitlagerbuchsen vorgesehen, die im Reibkontakt aufgrund der senkrecht angeordneten Reaktionskraft einem erhöhten Gleitreibungsverschleiß unterliegen. Dieser Gleitreibungsverschleiß wird durch eine selbstätige Nachstellbewegung des Spannarms bzw. des ortsfesten Elementes problemlos ausgeglichen. Wenn die Spannarmachse und das ortsfeste Element je mit einer Kegelfläche versehen sind, wobei zwischen diesen Kegelflächen die kegelige Gleitlagerbuchse vorgesehen ist, so kann die Gleitlagerbuchse auch lose dazwischen angeordnet sein. Im Betrieb wird sich bei gleichen Reibbedingungen an den Gleitlagerflächen regelmäßig eine Gleitreibung zwischen der äußeren kegeligen Mantelfläche der Gleitlagerbuchse und der anliegenden ortsfesten oder spannarmfesten Kegelfläche einstellen. Ebenso wie im beschriebenen Stand der Technik ist die Schraubendrehfeder der erfindungsgemäßen Spanneinrichtung zwischen den Stützen auf Verdrehung beansprucht und federt den Spannarm gegen das Zugmittel an.

Die US-A 4698049 offenbart weiterhin eine Dämpfungseinrichtung, die Schwenkbewegungen des Spannarms gegenüber dem ortsfesten Element dämpft. Diese Dämpfungseinrichtung ist dadurch gebildet, daß das ortsfeste Element und die Spannarmachse mit stirnseitig angeordneten, einander zugewandten Stirnflächen versehen ist, wobei zwischen diesen Stirnflächen eine Reibscheibe mit planen Stirnflächen vorgesehen ist. Die dem ortsfesten Element zugeordnete Stirnfläche ist an einer separaten Scheibe gebildet. Mit der erfindungsgemäßen Spanneinrichtung ist eine Dämfungeseinrichtung geschaffen, ohne daß im Gegensatz zu der bekannten Spanneinrichtung zusätzliche Maßnahmen ergriffen werden müssen. Die Gleitreibung zwischen den Gleitlagerflächen ist infolge der Reaktionskraft bzw der damit einhergehenden Flächenpressung erhöht, so daß in beiden Drehrichtungen des Spannarms der gewünschte Dämpfungseffekt eintritt.

Bei einer beispielsweise unter axialem Druck eingespannten Schraubendrehfeder ist eine besonders vorteilhafte Anordnung der Stützen und der Gleitlagerflächen dann gegeben, wenn die dem Spannarm zugeordnete Gleitlagerfläche radial außen und die dem ortsfesten Element zugeordnete Gleitlagerfläche radial innen angeordnet ist, wobei in Richtung von den verjüngten Enden der Gleitlagerflächen hin zu den erweiterten Enden der Gleitlagerflächen zuerst die ortsfeste Stütze und dann die spannarmfeste Stütze gelegen ist. Wenn die Schraubendrehfeder unter axialem Druck eingespannt ist, also eine axiale Druckkraft ausübt, ist eine ebenso einfache wie zweckmäßige Anordnung auch dadurch geschaffen, daß die dem Spannarm zugeordnete Gleitlagerfläche radial innen und die dem ortsfesten Element zugeordnete Gleitlagerfläche radial außen gelegen ist, wobei in Richtung von den verjüngten Enden der Gleitlagerflächen hin zu den erweiterten Enden der Gleitlagerflächen zuerst die spannarmfeste Stütze und dann die ortsfeste Stütze angeordnet ist. Bei beiden beschriebenen Anordnungen ergibt sich die senkrecht zu den Gleitlagerflächen angeordnete Reaktionskraft in vorteilhafter Weise, ohne daß es irgendwelcher zusätzlicher Bauteile bzw. Maßnahmen bedarf.

Erfindungsgemäße Spanneinrichtungen werden oftmals für den Aggregatetrieb von Motoren von Kraftfahrzeugen eingesetzt. Bei der Konstruktion derartiger Spanneinrichtungen ist unter anderem auch der Platzbedarf von Bedeutung. Eine besonders platzsparende Variante ist dadurch geschaffen, daß die spannarmfeste Spannarmachse radial innerhalb des Gleitlagers eine die Schraubendrehfeder aufnehmende axial geöffnete Ausnehmung aufweist, die von der ortsfesten Stütze radial überlappt wird. Diese Variante ist deshalb besonders sinnvoll, weil das radial außen gelegene Gleitlager wegen der umfangsseitig vergrößerten Gleitlagerflächen eine reduzierte Flächenpressung aufweist und damit einem reduzierten abrasiven Verschleiß unterliegt.

Eine hinsichtlich der Montage besonders vorteilhafte Spanneinrichtung besteht darin, daß die spannarmfeste Spannarmachse in dem topfförmig ausgebildeten, einen Topfboden, einen Topfmantel und einen Topfdeckel aufweisenden ortsfesten Element angeordnet ist, wobei die ortsfeste Stütze durch den Topfdeckel gebildet ist, und wobei ein in Umfangsrichtung ausgebildeter Schlitz an dem ortsfesten Element vorgesehen ist, durch den der Spannarm radial hindurchgeführt ist. Der Topfdeckel kann z.B. mittels eines Bajonettverschlußes an dem ortsfesten Element befestigt werden.

Bei einer weiteren Variante ist auf einem mit einer zylindrischen äußeren Mantelfläche versehenen Ende der ortsfesten Spannarmachse eine vorzugsweise lösbar an diesem Ende angeordnete, mit kegeliger äußerer Mantelfläche und zylindrischer innerer Mantelfläche versehene Kegelbuchse vorgesehen. Deren verjüngtes Ende ist einem von dem Spannarm abgewandten Ende der Spannarmachse zugewandt, wobei die Spannarmachse mit einer koaxialen Durchgangsbohrung versehen ist. Hier ist gewährleistet, daß der mit einer zur Spannarmachse koaxialen Kegelbohrung versehene Spannarm mit der vorzugsweise einstückig daran ausgebildeten Spannarmachse gemeinsam mit der Kegelbuchse und der Schraubendrehfeder auf die Spannarmachse aufgesetzt werden kann. Aufgrund der axialen Kraft der Schraubendrehfeder muß der Spannarm bzw. die Kegelbuchse gegen axiales Abgleiten von der Spannarmachse gesichert werden; beispielsweise kann stirnseitig am freien Ende der Spannarmachse eine zur Spannarmachse koaxiale Schraube in das Spannarmende hineingeschraubt sein, wobei die Kegelbuchse mit ihrer einen Stirnseite an dem Schraubenkopf axial abgestützt ist. Es kann sinnvoll sein, daß diese Schraube durch die koaxiale Durchgangsbohrung der Spannarmachse hindurchgeführt und in den Motorblock hineingeschraubt ist. Bei dieser Anordnung erfüllt die Schraube zwei Funktionen, nämlich erstens die Befestigung der Spannarmachse am Motorblock und zweitens das axiale Sichern des Spannarms bzw. der Kegelbuchse.

Eine weitere vorteilhafte erfindungsgemäße Weiterbildung besteht darin, daß an dem von dem Spannarm abgewandten Ende der Spannarmachse eine die Stütze bildende Stützscheibe befestigt ist, wobei die verjüngten Enden der Gleitlagerflächen der Stützscheibe zugewandt sind. Bei einer derartigen Spanneinrichtung weist das ortsfeste Element vorzugsweise eine Kegelbohrung auf, deren erweitertes Ende dem Spannarm zugewandt ist. Die vorzugsweise einstückig mit dem Spannarm ausgebildete Spannarmachse wird in die Kegelbohrung eingeführt, wobei deren freies Ende diese Kegelbohrung axial überragt. Auf dieses Ende wird die Stützscheibe vorzugsweise aufgepreßt. In diesem Fall braucht die Stützscheibe gegen axiales Verschieben auf der Spannarmachse nicht besonders gesichert zu werden. Die kegelige Bohrungswand der Kegelbohrung bildet in diesem Fall die eine Gleitlagerfläche.

Die Kegelbuchse muß nicht als separates Bauteil ausgeführt sein. Es kann auch zweckmäßig sein, daß auf einen mit über den Umfang verteilt angeordneten Durchbrüchen versehenen Mantel unter Bildung einer Gleitlagerbuchse im Spritzverfahren auf den Mantel aufgespritzter Gleitlagerwerkstoff die Durchbrüche durchdringt und hintergreift. Auf diese Weise ist eine innige Verbindung beispielsweise zwischen der Spannarmachse und der Gleitlagerbuchse geschaffen.

Wenn die Gleitlagerfläche in einem Winkel zwischen 8° und 30° zur Spannarmachse geneigt ist, stellen sich besonders günstige Kräfteverhältnisse im Gleitlager ein.

Unter Umständen kann es günstig sein, wenn wenigstens eine Gleitlagerfläche mit über den Umfang verteilt angeordneten Schmierstofftaschen versehen ist. Der Schmierstoff wird in die Schmierstofftaschen eingefüllt, so daß über einen langen Zeitraum hinweg optimale Dämpfungs- und Gleiteigenschaften gewährleistet sind. Die Schmierstofftaschen können natürlich auch an einer Gleitlagerbuchse vorgesehen sein.

Hinsichtlich der Belastung des Gleitlagers ist es zweckmäßig, wenn beide Enden der Schraubendrehfeder fest eingespannt sind. Auf diese Weise ist sichergestellt, daß unter der Torsion der Feder keine Radialkräfte wirken, die in das Gleitlager eingeleitet werden und dort unerwünschte Kantenbelastungen hervorrufen. Diese Einspannung kann aber auch erzielt werden, wenn an beiden Enden der Schraubendrehfeder unter deren Torsion je ein quer zur Längsachse der Schraubendrehfeder wirkendes Kräftepaar angreift. Dies ist beispielsweise dann der Fall, wenn die Feder infolge ihrer Torsion mit ihrem abgewinkelten Ende an einem spannarmfesten ersten Stützpunkt abgestützt ist, wobei dort die eine Stützkraft eines der Kräftepaare angreift. Mit ihrer an dieses Ende anschließenden Windung liegt die Schraubendrehfeder an einem zweiten Stützpunkt an, wobei dort die zweite Stützkraft des einen Kräftepaares angreift. Das andere Kräftepaar ist in analoger Weise an ortsfesten Stützpunkten gebildet. Auch hier ist gewährleistet, daß aufgrund der eingespannten Schraubendrehfeder keine weiteren Radialkräfte auf das Gleitlager einwirken.

Bei erfindungsgemäßen Spanneinrichtungen sind die erweiterten Enden des Gleitlagers vorzugsweise dem Spannarm zugewandt. Selbstverständlich sind auch bei einer Umkehrung dieser Anordnung die erfindungsgemäßen Vorteile gegeben, wobei allerdings mit einer erhöhten Flächenpressung und einem daraus resultierenden erhöhten abrasiven Verschleiß an dem verjüngten Ende des Gleitlagers zu rechnen ist.

### Kurze Beschreibung der Zeichnungen

Nachstehend wird die Erfindung anhand von drei in insgesamt zehn Figuren dargestellten Ausführungsbeispielen näher erläutert. Es zeigen:
- Figur 1: einen Längsschnitt durch eine erfindungsgemäße Spanneinrichtung,
- Figur 2: die Gleitlagerbuchse der Spanneinrichtung gemäß Figur 1,
- Figur 3: einen quergeschnittenen Teilausschnitt der Gleitlagerbuchse aus Figur 2,
- Figur 4: eine modifizierte Spannarmachse,
- Figur 5: eine weitere modifizierte Spannarmachse,
- Figur 6: ein modifiziertes ortsfestes Element,
- Figur 7: die Spanneinrichtung gemäß Figur 1, jedoch mit modifizierter spannarmfester Stütze,
- Figur 8: eine weitere erfindungsgemäße Spanneinrichtung,
- Figur 9: eine weitere erfindungsgemäße Spanneinrichtung,
- Figur 10: Einspannung der Enden der Schraubendrehfeder

### Ausführliche Beschreibung der Zeichnungen

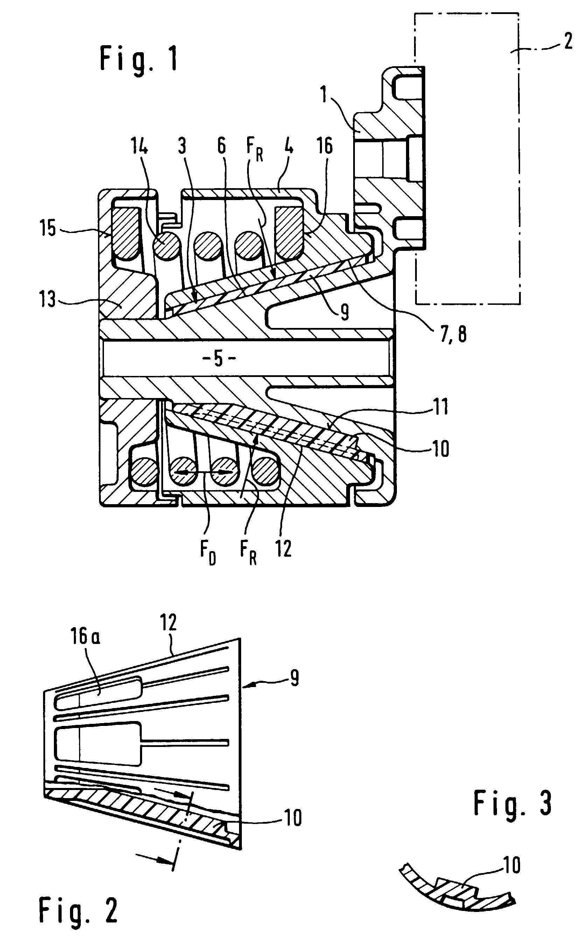

Bei dem erfindungsgemäßen Ausführungsbeispiel gemäß Figur 1 ist ein Spannarm 1 vorgesehen, an dem eine Spannrolle 2 zur Anlage an einem nicht dargestellten Zugmittel befestigt ist. Der Spannarm 1 ist über ein Gleitlager 3 gegenüber einem Gehäuse 4 drehbar gelagert. Eine einstückig mit dem Spannarm 1 gebildete Spannarmachse 5 weist eine kegelige äußere Mantelfläche 6 auf. Die Spannarmachse 5 ist in eine mit einer Kegelwand 7 versehene Kegelbohrung 8 des Gehäuses 4 eingeführt, wobei zwischen der zu der kegeligen äußeren Mantelfläche 6 parallelen Kegelwand 7 eine Gleitlagerbuchse 9 vorgesehen ist. Zur formschlüssigen Verbindung der Gleitlagerbuchse 9 mit der Spannarmachse 5 greift ein Vorsprung 10 der Gleitlagerbuchse 9 in eine Ausnehmung 11 der Spannarmachse 5 ein. Die Kegelwand 7 und die äußere kegelige Mantelfläche 12 der Gleitlagerbuchse 9 bilden Gleitlagerflächen zur drehbaren Lagerung des Spannarms 1 gegenüber dem Gehäuse 4. Mit ihrem von dem Spannarm 1 abgewandten Ende überragt die Spannarmachse 5 die Kegelbohrung 7, wobei eine Stützscheibe 13 auf dieses Spannarmende aufgepreßt ist. Die Stützscheibe 13 kann selbstverständlich auch form- oder stoffschlüssig mit dem Spannarm 1 verbunden sein. Eine Schraubendrehfeder 14 ist koaxial zu der Spannarmachse 5 angeordnet und einerseits an einer an der Stützscheibe 13 vorgesehenen Stütze 15 und andererseits an einer an dem Gehäuse vorgesehenen Stütze 16 dem Gehäuse 4 unter Ausübung einer Torsionskraft und einer axialen Druckkraft F_{D} eingespannt. Die erweiterten Enden der Gleitlagerflächen 7,12 sind dem Spannarm 1 zugewandt, wobei in Richtung von den verjüngten Enden der Gleitlagerflächen 7,12 hin zu den erweiterten Enden der Gleitlagerflächen 7, 12 zuerst die spannarmfeste Stütze 15 und dann die gehäusefeste Stütze 16 angeordnet ist. Der Spannarm 1 und die einstückig damit ausgebildete Spannarmachse 5 sind vorzugsweise in einem Druckgußverfahren hergestellt, wobei sich als Werkstoff eine Aluminiumlegierung anbietet.

Die Figuren 2 und 3 zeigen als Einzelheit die Gleitlagerbuchse 9 und den daran ausgebildeten Vorsprung 10, wobei die kegelige äußere Mantelfläche 12 mit Schmierstofftaschen 16a zur Aufnahme von Schmierstoff versehen ist.

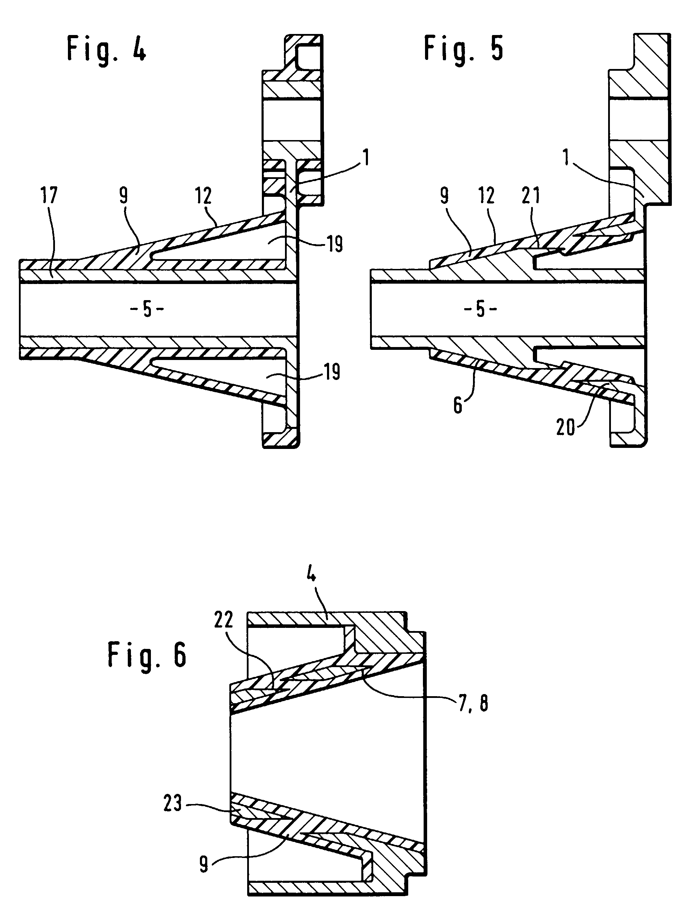

Figur 4 zeigt eine modifizierte Auführung des einstückig mit der Spannarmachse 5 verbundenen Spannarms 1. Die Spannarmachse 5 besteht hier aus einem zylindrischen Rohr 17, wobei die Gleitlagerbuchse 9 auf das zylindrische Rohr 17 im Spritzverfahren aufgetragen ist. Auch hier ist wieder die kegelige äußere Mantelfläche 12 als Gleitlagerfläche ausgewählt. Da beim Spritzgießen nach Möglichkeit konstante Wanddicken eingehalten werden, sind in Richtung auf das erweiterte Ende der Gleitlagerfläche 12 innerhalb der Gleitlagerbuchse 9 Ausnehmungen 19 vorgesehen.

Wird jedoch die in der Figur 1 dargestellte Spannarmachse 5 bevorzugt, ist es selbstverständlich möglich, auch hier die Gleitlagerbuchse 9 im Spritzverfahren auf die kegelige äußere Mantelfläche 6 der Spannarmachse 5 aufzutragen,wie Figur 5 zeigt. Zur Erzielung einer innigen Verbindung zwischen der Gleitlagerbuchse 9 und der Spannarmachse 5 sind im Mantel 20 der Spannarmachse 5 Durchbrüche 21 vorgesehen, wobei auf die äußere kegelige Mantelfläche 6 aufgespritzter Gleitlagerwerkstoff die Druchbrüche 21 durchdringt und hintergreift.

Die anhand der Figur 5 beschriebene Vorgehensweise zur Bildung der Gleitlagerbuchse 9 läßt sich analog auch auf das Gehäuse 4 übertragen, wie Figur 6 zeigt. In diesem Fall sind Durchbrüche 22 in einem Mantel 23 des Gehäuses 4 vorgesehen.

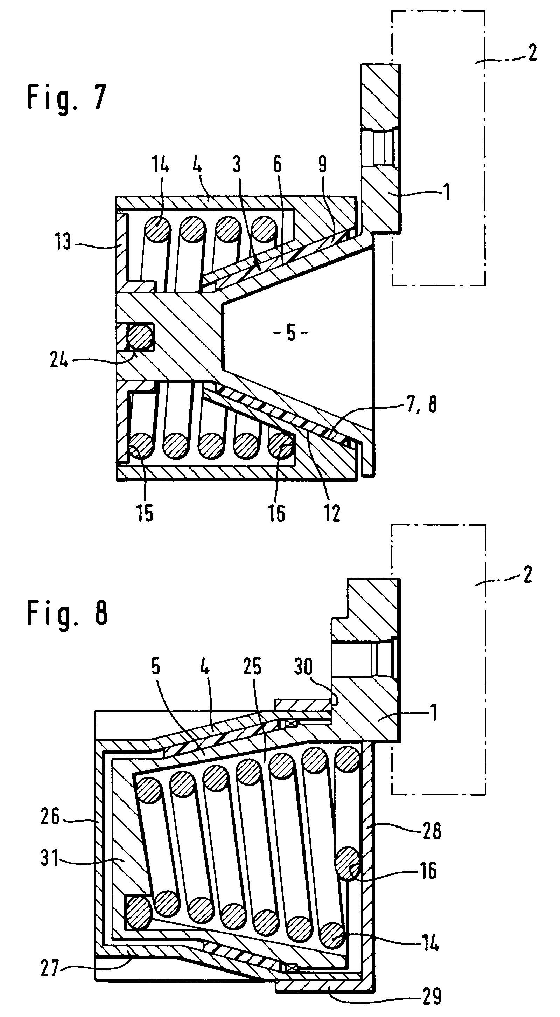

Das Ausführungsbeispiel gemäß Figur 7 stimmt im wesentlichen mit dem gemäß der Figur 1 weitgehend überein. Anders als in dem oben beschriebenen Ausführungsbeispiel ist zur Bildung der spannarmfesten Stütze hier jedoch das der Stützscheibe 13 zugewandte Ende der Schraubendrehfeder 14 in einer an der Spannarmachse 5 vorgesehenen Nut 24 eingespannt, wobei die Stützscheibe 13 in diese Nut 24 eingreift und die Schraubendrehfeder 14 axial abstützt. Ein weiterer Unterschied zu dem oben beschriebenen Ausführungsbeispiel besteht darin, daß die Gleitlagerbuchse 9 lose zwischen die Spannarmachse 5 und das Gehäuse 4 eingefügt ist. Die Gleitlagerbuchse 9 läßt sich also gegenüber der Kegelwand 7 als auch gegenüber der kegeligen äußeren Mantelfläche 6 der Spannarmachse 5 frei drehen.

Das in der Figur 8 dargestellte erfindungsgemäße Ausführungsbeispiel unterscheidet sich von den vorangegangen Ausführungsbeispielen im wesentlichen dadurch, daß die Spannarmachse 5 mit einer koaxialen zum Spannarm 1 hin axial geöffneten Ausnehmung 25 versehen ist, in der die Schraubendrehfeder 14 angeordnet ist. Das topfförmig ausgebildete Gehäuse 4 weist einen Topfboden 26 und einen Topfmantel 27 auf, wobei die ortsfeste Stütze an einem Topfdekkel 28 gebildet ist, dessen Deckelmantel 29 den Topfmantel 27 axial überlappt und an diesem befestigt ist. Ein in Umfangsrichtung ausgebildeter Schlitz 30 ist an dem Topfmantel 27 bzw. an dem Topfdeckel 28 vorgesehen, durch den der Spannarm 1 radial hindurchgeführt ist. Die Schraubendrehfeder 14 ist andererseits an einem Boden 31 der Spannarmachse 5 abgestützt.

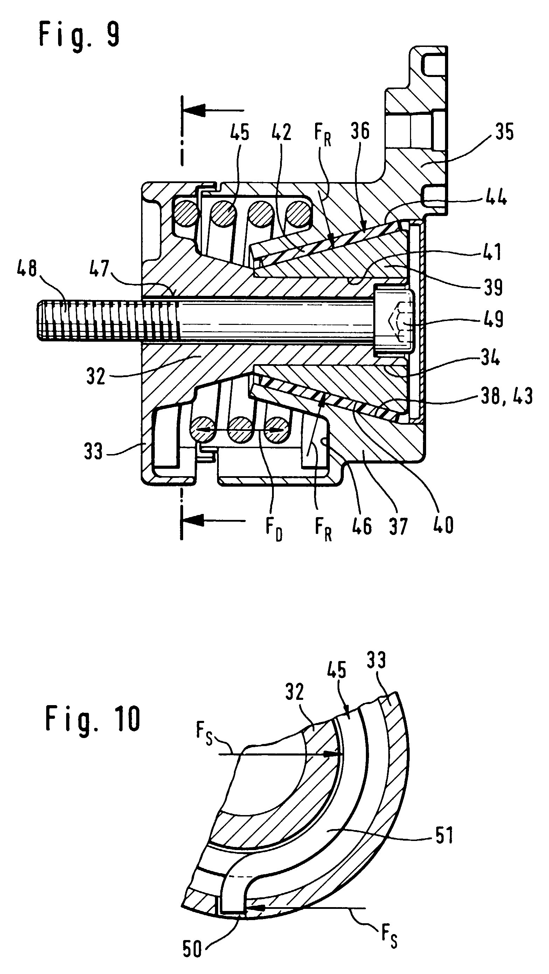

Während bei den vorangegangenen Ausführungsbeispielen die Spannarmachse 5 immer fest mit dem Spannarm 1 verbunden war, ist bei dem in der Figur 9 dargestellten Ausführungsbeispiel eine ortsfeste Spannarmachse 32 vorgesehen. Die Spannarmachse 32 ist einerseits mit einem Stützflansch 33 versehen, der zur Anlage an einen nicht dargestellten Motorblock vorgesehen ist. Auf einem mit einer zylindrischen äußeren Mantelfläche 34 versehenen Ende der Spannarmachse 32 ist ein Spannarm 35 mittels eines Gleitlagers 36 drehbar gelagert. Der Spannarm 35 weist einen zur Spannarmachse 32 koaxialen Spannarmmantel 37 mit einer Kegelbohrung 38 auf, wobei das verjüngte Ende der Kegelbohrung 38 von dem Spannarm 35 abgewandt ist. Zwischen dem Spannarmmantel 37 und der Spannarmachse 32 ist eine Kegelbuchse 39 angeordnet. Diese Kegelbuchse 39 weist eine kegelige äußere Mantelfläche 40 und eine zylindrische innere Mantelfläche 41 auf. Zwischen der Kegelbuchse 39 und dem Spannarmmantel 37 ist eine kegelige Gleitlagerbuchse 42 vorgesehen. Die Gleitlagerbuchse 42 und die Kegelbuchse 39 können selbstverständlich auch einteilig, beispielsweise im Spritzverfahren aus Kunststoff hergestellt werden. Gleitbewegungen finden hier zwischen der Kegelwand 43 der Kegelbohrung 38 und einer äußeren kegeligen Mantelfläche 44 der kegeligen Gleitlagerbuchse 42 statt. Eine koaxiale angeordnete Schraubendrehfeder 45 ist einerseits an dem Stützflansch 33 und andererseits an einer spannarmfesten Stütze 46 unter Ausübung einer axialen Druckkraft und einer Torsionskraft eingespannt. Die Spannarmachse 32 ist mit einer koaxialen Durchgangsbohrung 47 versehen, wobei eine Schraube 48 durch die Durchgangsbohrung 47 hindurchgeführt und mit dem nicht dargestellten Motorblock verschraubt ist. Es ist selbstverständlich möglich, zwischen den Schraubenkopf 49 und der dem Schraubenkopf 49 zugewandten Stirnseite der Gleitlagerbuchse 42 eine Unterlegscheibe vorzusehen. Auf diese Weise ist gewährleistet, daß die Gleitlagerbuchse 42 von der Spannarmachse 32 axial nicht abgleiten kann.

Figur 10 zeigt in einem Querschnitt die erfindungsgemäße Spanneinrichtung gemäß Figur 9, allerdings ohne die Schraube 48. Hier ist die spannarmfeste Stütze deutlich zu erkennen. Das abgewinkelte Ende der Schraubendrehfeder 45 greift in eine Öffnung 50 des Stützflansches 33 ein und ist darin umfangsseitig abgestützt. Die an dieses Ende anschließende Windung 51 der Schraubendrehfeder 45 liegt punktuell an der Spannarmachse 32 an. An diesen beiden Anlagen greifen Stützkräfte F_{S} an, die zusammen ein Kräftepaar bilden. Ist die ortsfeste Stütze für die Schraubendrehfeder in analoger Weise gebildet, ist erkennbar gewährleistet, daß keine aus der Torsion der Schraubendrehfeder 45 erzeugte radial wirkende Kraft auf das Gleitlager einwirkt. Die anhand des Ausführungsbeispieles gemäß der Figuren 9 und 10 erläuterten Abstützungen der Schraubendrehfeder sind selbstverständlich auch für die anderen Ausführungsbeispiele in derselben vorteilhaften Weise zweckmäßig.

Nachstehend wird die Wirkungweise der erfindungsgemäßen Spanneinrichtung näher erläutert. Infolge der erfindungsgemäßen Anordnung der Schraubendrehfeder 14, 45 wird deren axiale Druckkraft F_{D} als senkrecht zu den Gleitflächen 7, 12, 43, 44 angeordnete Reaktionskraft F_{R} in das Gleitlager 3, 36 eingeleitet. Die daraus resultierende erhöhte Reibung dämpft in vorteilhafter Weise Schwenkbewegungen des Spannarms 1, 35. Bei der erfindungsgemäßen Spanneinrichtung ist gewährleistet, daß der Spannarm 1, 35 ständig ohne spürbares Spiel gegenüber dem Gehäuse 3 bzw. der ortsfesten Spannarmachse 32 schwenkbar gelagert ist. Sobald infolge des abrassiven Verschleißes an den Gleitlagerflächen 7, 12, 43, 44 ein Spiel eintritt, findet eine axiale Verschiebung der Spannarmachse 5, 28 gegenüber dem Spannarm 1, 31 statt, wobei die Gleitlagerflächen 7, 12, 43, 44 gegeneinander gedrückt werden.

### Positionszahlenliste

- 1: Spannarm
- 2: Spannrolle
- 3: Gleitlager
- 4: Gehäuse
- 5: Spannarmachse
- 6: kegelige äußere Mantelfläche
- 7: Kegelwand
- 8: Kegelbohrung
- 9: Gleitlagerbuchse
- 10: Vorsprung
- 11: Ausnehmung
- 12: äußere kegelige Mantelfläche
- 13: Stützscheibe
- 14: Schraubendrehfeder
- 15: spannarmfeste Stütze
- 16: ortsfeste Stütze
- 16a: Schmierstofftaschen
- 17: zylindrisches Rohr
- 18: (gestrichen)
- 19: Ausnehmungen
- 20: Mantel
- 21: Durchbrüche
- 22: Durchbrüche
- 23: Mantel
- 24: Nut
- 25: Ausnehmung
- 26: Topfboden
- 27: Topfmantel
- 28: Topfdeckel
- 29: Deckelmantel
- 30: Schlitz
- 31: Boden
- 32: Spannarmachse
- 33: Stützflansch
- 34: zylindrische äußere Mantelfläche
- 35: Spannarm
- 36: Gleitlager
- 37: Spannarmmantel
- 38: Kegelbohrung
- 39: Kegelbuchse
- 40: kegelige äußere Mantelfläche
- 41: zylindrische innere Mantelfläche
- 42: kegelige Gleitlagerbuchse
- 43: Kegelwand
- 44: kegelige äußere Mantelfläche
- 45: Schraubendrehfeder
- 46: spannarmfeste Stütze
- 47: Durchgangsbohrung
- 48: Schraube
- 49: Schraubenkopf
- 50: Öffnung
- 51: Windung

## Patentansprüche

1. Spanneinrichtung für Zugmittel wie Riemen und Ketten, mit einem ein Spannmittel vorzugsweise Spannrolle (2) tragenden, gegen das Zugmittel angefederten Spannarm (1, 35), der gegenüber einem ortsfesten Element (4, 32) mittels eines Gleitlagers (3, 36) drehbar gelagert ist, dessen Gleitlagerflächen (7, 12, 43, 44) als zueinander parallel und zur Spannarmachse (5, 32) konzentrisch angeordnete Kegelflächen ausgebildet sind, und mit einer entlang der Spannarmachse (5, 32) gewundenen, einerseits an einer spannarmfesten Stütze (15, 46) und andererseits an einer ortsfesten Stütze (16,33) abgestützten Schraubendrehfeder (14, 45), **dadurch gekennzeichnet**, daß auf die Schraubendruckfeder im eingebauten Zustand neben der Torsionsvorspannung eine axiale Vorspannung aufgebracht ist, wobei die zwischen diesen Stützen (15, 16, 33, 46) unter Ausübung der axialen Kraft (F_{D}) eingespannte Schraubendrehfeder (14, 45) ihre axiale Kraft (F_{D}) als zu den Gleitlagerflächen (7, 12, 43, 44) senkrecht angeordnete Reaktionskraft (FR) in das Gleitlager (3, 36) einleitet, so daß die Gleitlagerflächen (7, 12, 43, 44) unter der axialen Kraft (F_{D}) gegeneinander gedrückt sind.

2. Spanneinrichtung nach Anspruch 1, **dadurch gekennzeichnet**, daß die Schraubendrehfeder (14, 45) eine axiale Druckkraft (F_{D}) ausübt.

3. Spanneinrichtung nach Anspruch 2, **dadurch gekennzeichnet**, daß die dem Spannarm (35) zugeordnete Gleitlagerfläche (43) radial außen und die dem ortsfesten Element (32) zugeordnete Gleitlagerfläche (44) radial innen gelegen ist, wobei in Richtung von den verjüngten Enden der Gleitlagerflächen (43, 44) hin zu den erweiterten Enden der Gleitlagerflächen (43, 44) zuerst die ortsfeste Stütze (33) und dann die spannarmfeste Stütze (46) angeordnet ist.

4. Spanneinrichtung nach Anspruch 2, **dadurch gekennzeichnet**, daß die dem Spannarm (1) zugeordnete Gleitlagerfläche (12) radial innen und die dem ortsfesten Element (4) zugeordnete Gleitlagerfläche (7) radial außen gelegen ist, wobei in Richtung von den verjüngten Enden der Gleitlagerflächen (7, 12) hin zu den erweiterten Enden der Gleitlagerflächen (7, 12) zuerst die spannarmfeste Stütze (13, 15) und dann die ortsfeste Stütze (16) angeordnet ist.

5. Spanneinrichtung nach Anspruch 1, **dadurch gekennzeichnet**, daß die spannarmfeste Spannarmachse (5) radial innerhalb des Gleitlagers (3) eine die Schraubendrehfeder (14) aufnehmende axial geöffnete Ausnehmung (25) aufweist, die von der ortsfesten Stütze (16, 28) radial überlappt wird.

6. Spanneinrichtung nach Anspruch 5, **dadurch gekennzeichnet**, daß die spannarmfeste Spannarmachse (5) in dem topfförmig ausgebildeten, einen Topfboden (26), einen Topfmantel (27) und einen Topfdeckel (28) aufweisenden ortsfesten Element (4) angeordnet ist, wobei die ortsfeste Stütze durch den Topfdeckel (28) gebildet ist, wobei ein in Umfangsrichtung ausgebildeter Schlitz (30) an dem ortsfesten Element (4) vorgesehen ist, durch den der Spannarm (1) radial hindurchgeführt ist.

7. Spanneinrichtung nach Anspruch 1, **dadurch gekennzeichnet**, daß auf einem mit einer zylindrischen äußeren Mantelfläche (34) versehenen Ende der ortsfesten Spannarmachse (32) eine an diesem Ende angeordnete, mit kegeliger äußerer Mantelfläche (40) und zylindrischer innerer Mantelfläche (41) versehene Kegelbuchse (39) vorgesehen ist, deren verjüngtes Ende einem von dem Spannarm (35) abgewandten Ende der Spannarmachse (32) zugewandt ist, wobei die Spannarmachse (32) mit einer koaxialen Durchgangsbohrung (47) versehen ist.

8. Spanneinrichtung nach Anspruch 1, **dadurch gekennzeichnet**, daß an dem von dem Spannarm (35) abgewandten Ende der Spannarmachse (32) ein als Stütze ausgebildeter Stützflansch (33) befestigt ist, wobei die verjüngten Enden der Gleitlagerflächen (43, 44) dem Stützflansch (33) zugewandt sind.

9. Spanneinrichtung nach Anspruch 1, **dadurch gekennzeichnet**, daß auf einem mit über den Umfang verteilt angeordneten Durchbrüchen (21, 22) versehenen Mantel (20, 23) unter Bildung einer Gleitlagerbuchse (9) im Spritzverfahren auf den Mantel (17, 20) aufgespritzter Gleitlagerwerkstoff die Durchbrüche (21, 22) durchdringt und hintergreift.

10. Spanneinrichtung nach Anspruch 1, **dadurch gekennzeichnet**, daß die Gleitlagerflächen (7, 12, 43, 44) in einem Winkel zwischen 8° und 30° zur Spannarmachse (5, 32) geneigt ist.

11. Spanneinrichtung nach Anspruch 1, **dadurch gekennzeichnet**, daß wenigstens eine der Gleitlagerflächen (12) mit über den Umfang verteilt angeordneten Schmierstofftaschen (16a) versehen ist.

12. Spanneinrichtung nach Anspruch 11, **dadurch gekennzeichnet**, daß die Schmierstofftaschen (16a) an einer Gleitlagerbuchse (9) vorgesehen sind.

13. Spanneinrichtung nach Anspruch 1, **dadurch gekennzeichnet**, daß beide Enden der Schraubendrehfeder (14, 15) fest eingespannt sind.

14. Spanneinrichtung nach Anspruch 1, **dadurch gekennzeichnet**, daß an beiden Enden der auf Verdrehung beanspruchten Schraubendrehfeder (45) je ein quer zu der Längsachse der Schraubendrehfeder (45) wirkendes Kräftpaar (F_{S}) angreift.

## Claims

1. Tensioning device for traction means such as belts and chains, which tensioning device has a tension arm (1, 35) which is spring-loaded against the traction means and carries a tensioning means, preferably a tension roller (2), while being mounted for rotation relative to a stationary element (4, 32) by means of a sliding bearing (3, 36), the sliding bearing surfaces (7, 12, 43, 44) of which are configured as conical surfaces that are parallel to each other and concentric with the tension arm axle (5, 32), the tensioning device further having a coiled torsion spring (14, 45) which is wound along the tension arm axle (5, 32) and is supported at one end on a support (15, 46) on the tension arm (1, 35) and at the other end, on a stationary support (16, 33), characterised in that, in addition to the torsional pre-stress, an axial pre-stress is applied to the coiled compression (torsion) spring in the installed state, the coiled torsion spring (14, 45) which is compressed between these supports (15, 16, 33, 46) while exerting the axial force (FD) introduces its axial force (FD) into the sliding bearing (3, 36) as a reaction force (FR) perpendicular to the sliding bearing surfaces (7, 12, 43, 44) so that the sliding bearing surfaces (7, 12, 43, 44) are pressed against each other under the axial force (F_{D}).

2. Tensioning device according to Claim 1, characterised in that the coiled torsion spring (14, 45) exerts an axial pressure force (F_{D}).

3. Tensioning device according to Claim 2, characterised in that the sliding bearing surface (43) associated to the tension arm (35) is disposed radially outwards and the sliding bearing surface (44) associated to the stationary element (32) is disposed radially inwards, and in the direction from the tapered ends of the sliding bearing surfaces (43, 44) towards the widened ends of sliding bearing surfaces (43, 44), the stationary support (33) is arranged first and then the support (46) formed on the tension arm (35)

4. Tensioning device according to Claim 2, characterised in that the sliding bearing surface (12) associated to the tension arm (1) is disposed radially inwards and the sliding bearing surface (7) associated to the stationary element (4) is disposed radially outwards, and in the direction from the tapered ends of the sliding bearing surfaces (7, 12) towards the widened ends of the sliding bearing surfaces (7, 12), the support (13, 15) formed on the tension arm (1) is arranged first and then the stationary support (16).

5. Tensioning device according to Claim 1, characterised in that the tension arm axle (5) attached to the tension arm (1) comprises, radially within the sliding bearing (3), an axially open recess (25) for receiving the coiled torsion spring (14), which recess (25) is radially overlapped by the stationary support (16, 28).

6. Tensioning device according to Claim 5, characterised in that the tension arm axle (5) attached to the tension arm (1) is arranged in the pot-shaped stationary element (4) which comprises a pot bottom (26), a pot jacket (27) and a pot cover (28), the stationary support being formed by the pot cover (28), and a slot (30) configured in peripheral direction being provided on the stationary element (4), through which slot (30) the tension arm (1) is radially inserted.

7. Tensioning device according to Claim 1 characterised in that a conical bushing (39) having a conical outer peripheral surface (40) and a cylindrical inner peripheral surface (41) is arranged on an end of the stationary tension arm axle (32) having a cylindrical outer peripheral surface (34), the tapered end of the conical bushing (39) faces an end of tension arm axle (32) turned away from the tension arm (35), and the tension arm axle (32) is provided with a coaxial through-bore (47).

8. Tensioning device according to Claim 1, characterised in that a support flange (33) configured as a support is secured to the end of the tension arm axle (32) turned away from the tension arm (35), and the tapered ends of the sliding bearing surfaces (43, 44) face the support flange (33).

9. Tensioning device according to Claim 1, characterised in that sliding bearing material injected by injection moulding on a jacket (20, 23) having peripherally spaced apertures (21, 22) forms a sliding bearing bushing (9), whereby the sliding bearing material penetrates through the apertures (21, 22) and engages therebehind.

10. Tensioning device according to Claim 1, characterised in that the sliding bearing surfaces (7, 12, 43, 44) are inclined at an angle between 8° and 30° to the tension arm axle (5, 32).

11. Tensioning device according to Claim 1, characterised in that at least one of the sliding bearing surfaces (12) is provided with peripherally spaced lubricant pockets (16a).

12. Tensioning device according to Claim 11, characterised in that the lubricant pockets (16a) are provided on a sliding bearing bushing (9).

13. Tensioning device according to Claim 1, characterised in that both ends of the coiled torsion spring (14, 15) are securely clamped.

14. Tensioning device according to Claim 1, characterised in that a force couple (Fs) acting crosswise to the longitudinal axis of the torsion-loaded coiled torsion spring (45) is applied to each end of the coiled torsion spring (45).

## Revendications

1. Dispositif tendeur pour des moyens de traction tels que des courroies ou des chaînes comprenant un bras tendeur (1, 35), suspendu par ressort par rapport au moyen de traction et portant un moyen de tension, de préférence un galet tendeur (2), ce bras étant monté en rotation par un palier lisse (3, 36) sur un élément fixe (4, 32), les surfaces (7, 12, 43, 44) du palier lisse étant coniques, parallèles, concentriques à l'axe du bras tendeur (5, 32), ainsi qu'un ressort hélicoïdal (14, 15) enroulé le long de l'axe du bras tendeur (5, 32), et appuyé par une extrémité contre un appui (15, 46) solidaire du bras tendeur et par l'autre extrémité contre un appui fixe (16, 33),
caractérisé en ce que
- une précontrainte axiale est appliquée au ressort hélicoïdal de compression, à l'état monté, en plus de la précontrainte de torsion,
- le ressort hélicoïdal (14, 45) tendu entre les appuis (15, 16, 33, 46) exerce une force axiale (F_{D}), induisant sa force axiale (FD) comme force de réaction (FR) perpendiculaire aux surfaces de palier lisse (7, 12, 43, 44) dans le palier lisse (3, 36) pour que les surfaces de glissement (7, 12, 43, 44) du palier lisse soient pressées l'une contre l'autre par la force axiale (F_{D}).

2. Dispositif tendeur selon la revendication 1,
caractérisé en ce que
le ressort hélicoïdal (14, 45) exerce une poussée axiale (F_{D}).

3. Dispositif tendeur selon la revendication 2,
caractérisé en ce que
la surface de palier lisse (43) associée au bras tendeur (35) est dirigée radialement vers l'extérieur et la surface de palier lisse (44) associée à l'élément fixe (32) est radialement à l'intérieur, et en direction allant des extrémités diminuées vers les extrémités élargies des surfaces de palier lisse (43, 44), on a tout d'abord l'appui fixe (33) puis l'appui (46) solidaire du bras tendeur.

4. Dispositif tendeur selon la revendication 2,
caractérisé en ce que
la surface de palier lisse (12) associée au bras tendeur (1) est située radialement à l'intérieur et la surface de palier lisse (7) associée à l'élément fixe (4) est située radialement à l'extérieur, et en direction allant des extrémités diminuées vers les extrémités élargies des surfaces de palier lisse (7, 12), on a tout d'abord l'appui (13, 15) solidaire du bras tendeur puis l'appui fixe (16).

5. Dispositif tendeur selon la revendication 1,
caractérisé en ce que
l'axe (5) solidaire du bras tendeur comporte radialement à l'intérieur du palier lisse (3), une cavité (25) ouverte axialement et recevant le ressort hélicoïdal (14), cette cavité étant chevauchée radialement par l'appui fixe (16, 28).

6. Dispositif tendeur selon la revendication 5,
caractérisé en ce que
l'axe (5) solidaire du bras tendeur est logé dans l'élément (4) en forme de pot, ayant un fond (26), une enveloppe (27) et un chapeau (28), l'appui fixe étant formé par le chapeau (28) et une fente (30) est réalisée dans la direction périphérique sur l'élément fixe (4) à travers laquelle passe le bras tendeur (1).

7. Dispositif tendeur selon la revendication 1,
caractérisé en ce que
sur une extrémité de l'axe (32) du bras tendeur fixe, muni d'une surface enveloppe (34) cylindrique, extérieure, à une extrémité, il est prévu une douille conique (39), munie d'une surface enveloppe extérieure (40) conique et d'une surface enveloppe intérieure (41) cylindrique, la petite extrémité étant tournée vers une extrémité de l'axe (32) du bras tendeur non situé du côté du bras tendeur (35), l'axe (32) étant muni d'un perçage traversant (47) coaxial.

8. Dispositif tendeur selon la revendication 1,
caractérisé en ce que
l'extrémité de l'axe (32) du bras tendeur non tournée vers le bras tendeur (32) porte solidairement une bride d'appui (33) réalisée en forme d'appui et la petite extrémité des surfaces de palier lisse (43, 44) est tournée vers la bride d'appui (33) .

9. Dispositif tendeur selon la revendication 1,
caractérisé en ce qu'
une matière de palier lisse injectée sur l'enveloppe (20, 23) munie de passages (21, 22), répartis à la périphérie, forme un manchon de palier lisse (9), par injection sur l'enveloppe (17, 20), la matière traversant les passages (21, 22) et venant en contre-dépouille.

10. Dispositif tendeur selon la revendication 1,
caractérisé en ce que
les surfaces de palier lisse (7, 12, 43, 44) sont inclinées par rapport à l'axe (5, 32) du bras tendeur selon un angle compris entre 8° et 30°.

11. Dispositif tendeur selon la revendication 1,
caractérisé en ce qu'
au moins l'une des surfaces de palier lisse (12) comporte des poches à lubrifiant (16a) réparties à la périphérie.

12. Dispositif tendeur selon la revendication 11,
caractérisé en ce que
les poches à lubrifiant (16a) sont prévues sur un manchon de palier lisse (9).

13. Dispositif tendeur selon la revendication 1,
caractérisé en ce que
les deux extrémités des ressorts de torsion (14, 16) sont bloquées solidairement.

14. Dispositif tendeur selon la revendication 1,
caractérisé en ce que
les deux extrémités du ressort hélicoïdal (45) sollicité en torsion, sont soumises à une paire de forces (Fs) agissant transversalement à l'axe longitudinal du ressort hélicoïdal (45).
